# EUROPÄISCHE PATENTSCHRIFT

(11) **EP 2 110 225 B1**
(45) Veröffentlichungstag und Bekanntmachung des Hinweises auf die Patenterteilung: **20.06.2012**
(21) Anmeldenummer: 09157677.7
(22) Anmeldetag: 09.04.2009
(51) Int. Cl.: B29C 49/64, B29C 49/06

(54) **Lampenvorrichtung sowie Heizstrecke für die Erwärmung von Vorformlingen für die Herstellung von Behältnissen**
Lamp device and heat strip for heating pre-forms in the creation of containers
Dispositif de lampes et parcours de chauffage pour le chauffage d'ébauches préalables destinées à la fabrication de récipients

(30) Priorität: 17.04.2008 DE 202008005252 U
(43) Veröffentlichungstag der Anmeldung: 21.10.2009
(73) Patentinhaber: Krones AG, 93073 Neutraubling (DE)
(72) Erfinder: Detrois, Christian, 88190 Golbey (FR)
(74) Vertreter: Bittner, Bernhard

(56) Entgegenhaltungen:
- JP-A- 2004 306 510
- US-A- 3 445 096
- US-A- 4 605 839
- US-A- 4 923 395
- US-A- 5 688 466

## Beschreibung

Die Erfindung eine Lampen-Vorrichtung, eine Heizstrecke für die Erwärmung von Vorformlingen für die Herstellung von Behältnissen sowie eine Vorrichtung zur Herstellung von Behältnissen.

Es ist üblich, dass bei der Herstellung von als PET-Flaschen gestalteten Behältnissen Vorformlinge zur Anwendung kommen, die röhrchenartig ausgebildet und mit einem Boden versehen sind, und an dem dem Boden abgewandten offenen Ende mit einem Außengewinde sowie mit einem Tragring versehen sind. Der Tragring dient dabei insbesondere dem Transport während der Herstellung. Das Außengewinde hat dabei bereits eine Fertigkontur, die es in der entstehenden PET-Flasche beibehalten soll. Dieses Gewinde dient der entstehenden PET-Flasche als Gegengewinde für einen Schraubverschluss zum Verschließen der PET-Flasche.

Im Rahmen der Herstellung des Behältnisses aus dem Vorformling muss der Vorformling erwärmt werden, um aus ihm, beispielsweise in einem Streckblasvorgang, das Behältnis bzw. die PET-Flasche formen zu können. Da allerdings das Gewinde bereits seine Endkontur hat, sollten Verformungen in diesem Bereich möglichst vermieden werden. Das Erwärmen des Gewindebereichs birgt allerdings die Gefahr in sich, dass entweder bereits durch rein thermische Einflüsse oder durch anschließende mechanische Einflüsse des aufgeweichten Materials unerwünschte Verformungen im Gewindebereich bewirkt werden.

Um einer derartigen Erwärmung des mit dem Gewinde versehenen Bereichs des Vorformlings, der auch als Kopfbereich bezeichnet wird, entgegen zu wirken, wird in der DE 101 45 456 A1 vorgeschlagen, zusätzlich zu dem sogenannten Kühlschild eine Blende vorzusehen, die mit einem Durchbruch versehen ist, in welchem der Tragring beim Erwärmen platziert werden soll. Ergänzend hierzu soll gemäß der DE 101 45 456 eine Kühleinrichtung auf den Kopfbereich des Vorformlings einwirken.

Weniger mit einer ungewollten Erwärmung eines Vorformlings in dessen Kopfbereich, aber dennoch mit ungewollter Erwärmung, nämlich mit ungewollter Erwärmung der Infrarotlampe selbst, beschäftigt sich die DE 199 09 542 A1. Um die Eigenstrahlung einer Infrarotlampe zu reduzieren, schlägt die DE 199 09 542 A1 vor, den Reflektor einer Lampen-Reflektor-Anordnung so zu gestalten, dass er quer zur Längsrichtung ein zweischenkliges, beidseitig einer Mittelebene der Infrarotlampe erstreckendes Querschnittsprofil aufweist, gemäß dem die Schenkel der Reflektoroberfläche von einem in der Mittelebene liegenden Scheitel aus zunächst in rückwärtige, an der Vorderseite der Anordnung wegweisende Richtungen verlaufen, im weiteren Verlauf mit zunehmendem Abstand zur Mittelebene jedoch umkehren und in Vorwärtsrichtung verlaufen.

Die WO 2006/045926 A1 beschäftigt sich mit dem Problem, dass bei Heizstrecken für die Erwärmung von Vorformlingen zur Flaschenfertigung ungewünschte Verlustleistung dadurch auftreten kann, dass im Bereich der in Bodennähe des Vorformlings angeordneten Lampen Strahlung der dem Kopf des Vorformlings abgewandten Richtung emittiert wird, ohne zur Erwärmung des Vorformlings beizutragen. Um diese Verlustleistung zu verringern, wird nun gemäß der WO 2006/045926 A1 vorgeschlagen, quer zur Längsachse des Vorformlings in Bodennähe eine Querwand vorzusehen, von welcher emittierte Strahlung zurück in Richtung des Vorformlings reflektiert wird.

Die WO 2005/000560 schlägt zur Verringerung des Energiebedarfs von Einrichtungen zum Erwärmen von Vorformlingen vor, diese Vorformlinge entlang eines Parkours zu führen, der im Wesentlichen als entlang einer Kreisbahn verlaufender Slalomkurs bezeichnet werden kann.

Die WO 96/32243 schlägt vor, dass das von einer Lampe zur Erwärmung von Vorformlingen emittierte Licht mittels einer Fokusiereinrichtung an eine gewünschte Stelle zu fokusieren ist.

Aus der US 5,688,466 sind Heizlampen für eine Blasformvorrichtung bekannt. Dabei sind Strahlungsquellen vorgesehen, deren Reflektoren sich in einem Winkel von ca. 200° um die Strahlungsquelle erstrecken.

Aus der US 4,923,395 ist weiterhin ein Ofen für eine Blasformmaschine bekannt. Auch hier sind Strahlungsquellen vorgesehen, die von einem Reflektor umgeben sind.

Der Erfindung liegt nun die Aufgabe zugrunde, eine wirkungsvolle, aber baulich einfache Möglichkeit zu finden, um die Erwärmung des Gewindebereichs von vorformlingen bei der Behälterfertigung beim Erwärmen der Vorformlinge gering zu halten.

Erfindungsgemäß wird eine Lampen-Vorrichtung gemäß Anspruch 1 vorgeschlagen. Eine Vorrichtung zum Erwärmen ist Gegenstand des Anspruchs 6. Eine Vorrichtung zur Herstellung von Behältnissen ist Gegenstand des Anspruchs 10. Bevorzugte Weiterbildungen sind Gegenstand der Unteransprüche.

Es wird also insbesondere eine Lampen-Vorrichtung für die Strahlungserwärmung von einen Tragring aufweisenden Vorformlingen für die Fertigung von Behältnissen vorgeschlagen. Derartige Behältnisse können insbesondere Flaschen, wie beispielsweise PET-Flaschen sein. Die Lampen-Vorrichtung bildet eine Strahlungsquelle aus. Ferner bildet die Lampen-Vorrichtung einen Reflektor für die Reflektion von von der Strahlungsquelle emittierter Strahlung aus. Erfindungsgemäß erstreckt sich der Reflektor bezüglich der Umfangsrichtung einer durch die Strahlungsquelle verlaufenden Achse umfangsmäßig über einen Winkel, der größer als 250° ist.

Bevorzugt ist der Winkel, über den sich der Reflektor umfangsmäßig bezüglich der Umfangsrichtung der durch die Strahlungsquelle verlaufenden (gedachten) Achse verläuft, größer 270°. In einer besonders bevorzugten Ausgestaltung erstreckt sich der Reflektor bezüglich der Umfangsrichtung einer durch die Strahlungsquelle verlaufenden Achse umfangsmäßig über einem Winkel, der im Wesentlichen 270° beträgt.

Die Strahlungsquelle ist in vorteilhafter Ausgestaltung eine Infrarot-Strahlungsquelle.

Der Reflektor kann in vorteilhafter Gestaltung gekrümmt ausgebildet sein, wie beispielsweise kreisbogenförmig gekrümmt. Der Reflektor kann insbesondere so sein, dass er sich gekrümmt bzw. kreisbogenförmig gekrümmt um die angesprochene Achse erstreckt. Es kann aber auch vorgesehen sein, dass der Reflektor so gestaltet ist, dass er im Querschitt gestufte Übergänge bzw. Ecken aufweist. Über solche gestuften Ecken kann das Reflektionsverhalten beeinflusst werden, und zwar insbesondere dahingehend, dass Sprünge oder Konzentrationen der reflektierten Strahlung auftreten.

Ferner wird insbesondere eine Vorrichtung zum Erwärmen von einen Tragring aufweisenden Vorformlingen für die Fertigung von Behältnissen, insbesondere von Flaschen, wie beispielsweise PET-Flaschen, vorgeschlagen, wobei diese Vorrichtung eine Vielzahl von Lampen-Vorrichtungen aufweist. Diese Lampen-Vorrichtungen sind dabei insbesondere Lampen-Vorrichtungen, die eine Strahlungsquelle, wie beispielsweise Infrarot-Strahlungsquellen, sowie einen Reflektor aufweisen. Dabei ist vorgesehen, dass zumindest eine Lampen-Vorrichtungen dieser Vorrichtung in erfindungsgemäßer Weise ausgestaltet ist.

In einer besonders bevorzugten Ausgestaltung ist vorgesehen, dass die Vorrichtung zum Erwärmen von Behältnissen verschieden ausgestaltete Lampen-Vorrichtungen aufweist. Es kann insbesondere vorgesehen sein, dass diese Vorrichtung zumindest eine Lampen-Vorrichtung aufweist, die in erfindungsgemäßer Weise gestaltet ist, und eine Vielzahl von weiteren Lampen-Vorrichtungen, die eine Strahlungsquelle sowie einen Reflektor aufweisen, wobei sich der Reflektor bezüglich einer durch die Strahlungsquelle verlaufenden Achse umfangsmäßig über einen Winkel erstreckt, der im Wesentlichen 180° ist.

In besonders zu bevorzugenden Ausgestaltung ist vorgesehen, dass die Vorrichtung eine Wendel aufweist, die im Betrieb der Lampen-Vorrichtungen von diesen erhitzt werden. Es kann vorgesehen sein, dass diese Wendel beispielsweise aus Metall ist.

In besonders zu bevorzugender Ausgestaltung weist die Vorrichtung ferner ein Kühlschild auf. Ein solches Kühlschild ist insbesondere für das Kühlen bzw. Abschirmen des Kopfes des Vorformlings vorgesehen.

Vorzugsweise ist eine Vielzahl von Lampen-Vorrichtungen in einer oder mehreren, insbesondere in zwei, Reihen angeordnet. Dies kann insbesondere so sein, dass die Achsen dieser Lampen-Vorrichtungen bzw. der Strahlungsquellen dieser Lampen-Vorrichtungen im Wesentlichen senkrecht zur Längsachse des Vorformlings verlaufen, wenn dieser Vorformling durch die Vorrichtung zum Erwärmen bewegt wird. Die Achsen der Lampen-Vorrichtungen bzw. Strahlungsquellen können gekrümmt verlaufen. In zu bevorzugender Ausgestaltung sind diese Achsen allerdings entlang ihrer gesamten Länge gerade ausgebildet. Das angesprochene Kühlschild dienst insbesondere zum Schützen des Gewindes eines Vorformlings bei dessen Erwärmung. Es kann vorgesehen sein, dass die Vorrichtung eine Kühlung aufweist, die frei von einer Wasserkühlung ist bzw. als reine Luftkühlung für das Kühlschild ausgebildet ist. Insbesondere ist für das Kühlen des Gewindes bzw. Kopfes des Vorformlings eine Luftkühlung für das Kühlschild bzw. eine mit dem Kühlschild zusammenwirkende Luftkühlung vorgesehen.

In besonders zu bevorzugender Ausgestaltung ist vorgesehen, dass ein Kühlschild vorgesehen ist, und die dem Kühlschild benachbarte bzw. am nächsten gelegene Lampen-Vorrichtung in erfindungsgemäßer Weise ausgestaltet ist, wobei weitere, weiter vom Kühlschild entfernte Lampen-Vorrichtungen in oben erwähnter Weise einen sich über 180° oder im Wesentlichen über 180° erstreckenden Reflektor aufweisen. Dabei kann vorgesehen sein, dass die den sich über 180° oder im Wesentlichen über 180° erstreckenden Reflektor aufweisenden Lampen-Vorrichtungen so positioniert sind, dass die Reflektoren jeweils zu dem Bereich, durch den Vorformling im Betrieb zum Erwärmen bewegt wird, offen sind. Bei kreisbogenförmig ausgebildeten Reflektoren, die im Vorgenannten insbesondere halbkreisförmig wären, ist es insbesondere so, dass die offene Seite des Halbkreises zu dem Bereich hin gerichtet ist, in dem Vorformlinge in Betrieb durch die Vorrichtung bzw. Heizstrecke bewegt werden.

Das Kühlschild weist in vorteilhafter Ausgestaltung einen L-förmigen Querschnitt auf. In besonders zu bevorzugender Gestaltung ist vorgesehen, dass eine bereits angesprochene Wendel vorgesehen ist, und das Kühlschild diese Wendel kontaktiert.

Besonders bevorzugt ist vorgesehen, dass ein Vielzahl von Lampen-Vorrichtungen vorgesehen ist, von denen zumindest eine in erfindungsgemäßer Weise gestaltet ist, und deren Achsen, insbesondere Achsen, um die sich umfangsmäßig der jeweilige Reflektor erstreckt, parallel zueinander ausgerichtet sind. Es kann vorgesehen sein, dass eine Reihe von Lampen-Vorrichtungen vorgesehen ist, es kann aber auch vorgesehen sein, dass mehrere Reihen, insbesondere zwei Reihen, von Lampen-Vorrichtungen vorgesehen sind. In besonders zu bevorzugender Ausgestaltung ist vorgesehen, dass - zumindest je Reihe - ein oder zwei Lampen-Vorrichtungen in erfindungsgemäßer Weise ausgestaltet sind, wobei diese eine bzw. diese zwei Lampen-Vorrichtungen jeweils endseitig einer Reihe von Lampen-Vorrichtungen angeordnet ist. Sofern nur eine Lampen-Vorrichtung einer derartigen Reihe in erfindungsgemäßer Weise ausgestaltet ist, ist insbesondere vorgesehen, dass diese endseitig auf der Seite angeordnet ist, an der der Kopf bzw. das Gewinde des Vorformlings an der Reihe vorbeibewegt wird bzw. an der ein Kühlschild vorgesehen ist.

In besonders vorteilhafter Ausgestaltung ist vorgesehen, dass eine Wendel vorgesehen ist, wobei die nicht benötigte Strahlleistung mittels des Reflektors bzw. der Reflektoren, insbesondere des Reflektors der erfindungsgemäß ausgestalteten Lampen-Vorrichtung, rückreflektiert wird auf die Wendel, und in Wärme umgesetzt wird, wobei sie dabei hilft die Wendel zu heizen und damit Energie bzw. Strom zu sparen. Es kann beispielsweise vorgesehen sein, dass die Vorrichtung bzw. die erfindungsgemäße Lampen-Vorrichtung so ausgestaltet ist, dass sie bzw. der Strahler unter 2800 Watt, vorzugsweise unter 2500 Watt, bevorzugt unter 2000 Watt, besonders bevorzugt ca. 1500 Watt benötigt.

Erfindungsgemäß wird ferner insbesondere eine Vorrichtung zur Herstellung von Behältnissen wie Flaschen, insbesondere PET-Flaschen, vorgeschlagen, die zumindest eine erfindungsgemäße Lampen-Vorrichtung bzw. eine erfindungsgemäße Vorrichtung zum Erwärmen von einem Tragring aufweisenden Vorformling aufweist.

Es kann vorgesehen sein, dass diese Vorrichtung zur Herstellung von Behältnissen ferner eine Vorrichtung zum Formen eines Behältnisses aus einem erwärmten Vorformling aufweist. Dies kann insbesondere so sein, dass die Vorrichtung eine Streckblasvorrichtung aufweist. Ferner kann vorgesehen sein, dass die Vorrichtung Transportstrecken zum automatischen Transportieren der Vorformlinge und/oder Behältnisse aufweist. Dies kann insbesondere so sein, dass die Transportvorrichtung derart ausgebildet ist, dass sie die einen Tragring aufweisenden Vorformlinge im Bereich dieses Tragrings erfassen bzw. greifen kann.

Im Folgenden soll nun ein Ausführungsbeispiel anhand der beigefügten Figuren näher erläutert werden. Dabei zeigt:
- Fig. 1: Eine erste, beispielhafte Ausführungsform der Erfindung in schematischer teilweiser Ansicht; und
- Fig. 2: Eine nach Kenntnis der Anmelderin in bekannter Weise gestaltete Vorrichtung.

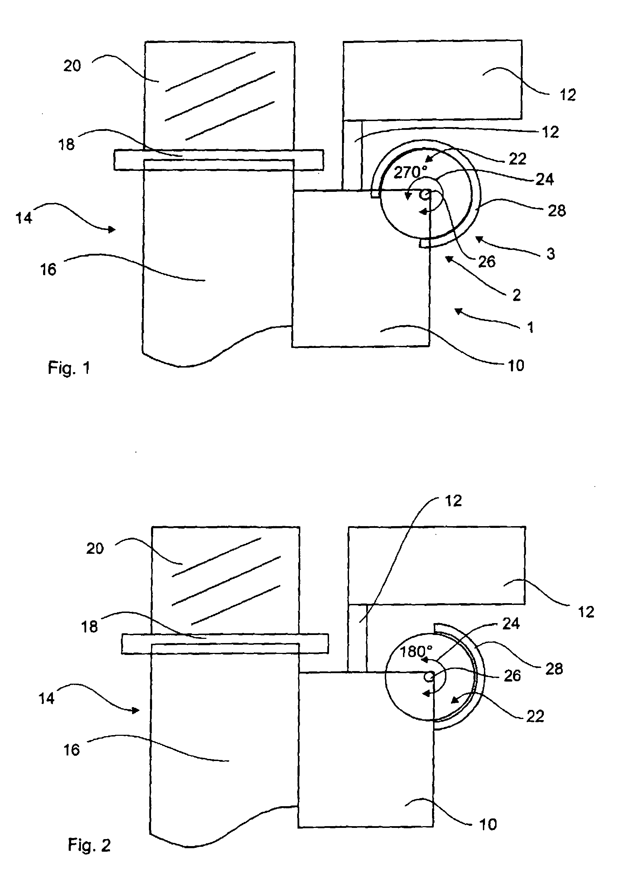

Fig. 1 zeigt eine in teilweiser Ansicht dargestellte beispielhafte erfindungsgemäße Vorrichtung zur Herstellung von Behältnissen, hier beispielhaft Flaschen bzw. PET-Flaschen 1, in teilweiser Ansicht, die eine Vorrichtung 2 zum Erwärmen von einem Tragring aufweisenden Vorformlingen aufweist, die ebenfalls in teilweiser Ansicht dargestellt ist, und mit einer Lampen-Vorrichtung 3 für die Strahlungserwärmung von einem Tragring aufweisenden Vorformlingen für die Fertigung von Behältnissen bzw. Flaschen versehen ist.

Die Vorrichtung 1 bzw. 2 weist eine Mehrzahl von Lampen-Vorrichtungen auf, sowie eine Wendel bzw. Heizwendel 10 und ein Kühlschild 12. Dargestellt in Figur 1 ist ferner ein Vorformling 14, auch als "Preform", der einen mit einem Boden versehenen Körper 16 aufweist, und einen von diesem nach radial außen abragenden umfangsmäßig verlaufenden Tragring 18 sowie einen auf der abgewandten Seite des nicht dargestellten Bodens des Tragrings angeordneten Kopf bzw. Gewindehals 20. Das Gewinde des Gewindehalses bzw. Kopfes 20 soll beim Erwärmen des Vorformlings möglichst nicht bzw. nur in geringem Maße erwärmt werden, um ein ungewolltes Verformen des Gewindes bzw. Gewindehalses bzw. Kopfes zu verhindern, da dieser bereits seine Endkontur der entstehenden Flasche aufweist.

Andererseits soll allerdings der Körper 16 des Vorformlings 14 erwärmt werden, um diesen anschließend - insbesondere im Rahmen eines Streckblasvorganges entsprechend formen zu können.

Die Vorrichtung bildet eine Strecke aus, entlang welcher der Vorformling bewegt werden kann, und zwar so, dass sein Körper 16 entlang der Wendel 10 bewegt wird, und mittels einer Vielzahl von Lampen-Vorrichtungen aufgeheizt wird. Eine dieser Lampen-Vorrichtungen, nämlich die Lampen-Vorrichtung 3, ist so ausgebildet, dass sie eine Strahlungsquelle 22 aufweist, sowie eine sich bezüglich der Umfangsrichtung 24 einer durch die Strahlungsquelle 22 verlaufenden Achse 26 umfangsmäßig erstreckenden Reflektor 28. Dieser Reflektor 28 erstreckt sich umfangsmäßig über einen Winkel, der größer als 250° ist und hier im Wesentlichen 270° beträgt.

Die Lampen-Vorrichtung 3 ist so angeordnet, dass der Reflektor 28 die Strahlungsquelle 22 einerseits in Richtung des Kühlschildes 12 in einem Winkel von im Wesentlichen 180° abschirmt und andererseits die der Transportbahn entlang der der Wendel 10 abgewandeten Richtung über einen Winkel von im Wesentlichen 180° abschirmt.

Die in Fig. 2 gezeigte Gestaltung zeigt eine nach interner Kenntnis der Anmelderin bekannte Vorrichtung. Im Gegensatz zu der Lampen-Vorrichtung 3 ist dort vorgesehen, dass eine Lampen-Vorrichtung gegeben ist, die einen Reflektor aufweist, der sich nur über 180° erstreckt und Richtung des Vorformlings bzw. der Wendel offen ist.

Bei dieser Gestaltung werden ca. 50 % der Licht- bzw. Strahlungsleistung in das Kühlschild gestrahlt. Das Kühlschild benötigt dabei eine Wasserkühlung. Der Strahler hat ca. 3000 Watt.

Bei der Gestaltung gemäß Fig. 1 können zusätzlich Lampen-Vorrichtungen entsprechend der Fig. 2 vorgesehen sein, die sich auf der der Lampen-Vorrichtung 3 abgewandten Seite des Kühlschildes (bzw. in Fig. 2 unterhalb) in Reihe an die Lampen-Vorrichtung 3 anschließen und an der Wendel 10 positioniert sind. Es ist also insbesondere vorgesehen, dass eine Reihe von Lampen-Vorrichtungen vorgesehen ist, wobei die endseitige, insbesondere dem Kühlschild 12 zugewandte Lampen-Vorrichtung einen sich über 270° erstreckenden Reflektor aufweist, während die verbleibenden Lampen-Vorrichtungen einen sich nur über 180° erstreckenden Reflektor aufweisen.

Es können auch zwei oder mehr zwei, wie z.B. drei, als derartiger Reihen vorgesehen sein. Diese Reihen begrenzen ist die Strecke bzw. den Kanal entlang welcher die Vorfomlinge zum Erwärmen bewegt werden.

Bei einer solchen Gestaltung wird insbesondere die nicht benötigte Strahlungsleistung auf die Wendel 10 zurückreflektiert oder in Wärme umgesetzt. Dies hilft dabei, die Wendel zu heizen und damit Strom bzw. Energie zu sparen. Das Kühlschild benötigt im Gegensatz zu der in Fig. 2 gezeigten Gestaltung keine Wasserkühlung; Es reicht vielmehr eine Luftkühlung. Der Strahler benötigt nur ca. 1500 Watt.

## Patentansprüche

1. Lampen-Vorrichtung für die Strahlungserwärmung von einen Tragring (18) aufweisenden Vorformlingen (14) für die Fertigung von Behältnissen, insbesondere Flaschen, wobei diese Lampen-Vorrichtung (3) eine Strahlungsquelle (22) ausbildet und wobei diese Lampen-Vorrichtung (3) einen Reflektor (28) für die Reflexion von der Strahlungsquelle emittierter Strahlung ausbildet,
**dadurch gekennzeichnet, dass** sich der Reflektor (28) bezüglich der Umfangsrichtung einer durch die Strahlungsquelle (22) verlaufenden Achse (26) umfangsmäßig über einen Winkel erstreckt, der größer als 250° ist.

2. Lampen-Vorrichtung nach Anspruch 1, **dadurch gekennzeichnet, dass** sich der Reflektor (28) bezüglich der Umfangsrichtung einer durch die Strahlungsquelle (22) verlaufenden Achse (26) umfangsmäßig über einen Winkel erstreckt, der im Wesentlichen 270°, ist.

3. Lampen-Vorrichtung nach einem der vorangehenden Ansprüche, **dadurch gekennzeichnet, dass** die Strahlungsquelle (22) eine Infrarot-Strahlungsquelle (22) ist.

4. Lampen-Vorrichtung nach einem der vorangehenden Ansprüche, **dadurch gekennzeichnet, dass** der Reflektor (28) gekrümmt ausgebildet ist.

5. Lampen-Vorrichtung nach Anspruch 4, **dadurch gekennzeichnet, dass** der Reflektor (28) im Querschnitt kreisbogenförmig gekrümmt ausgebildet ist.

6. Vorrichtung zum Erwärmen von einen Tragring aufweisenden Vorformlingen (14) für die Fertigung von Behältnissen, wobei diese Vorrichtung (2) eine Vielzahl von Lampen-Vorrichtungen aufweist, **dadurch gekennzeichnet, dass** diese Vorrichtung (2) für das Erwärmen von Vorformlingen (14) zumindest eine gemäß einem der vorangehenden Ansprüche ausgestaltete Lampen-Vorrichtung (3) aufweist.

7. Vorrichtung nach Anspruch 6, **dadurch gekennzeichnet, dass** diese Vorrichtung (2) für das Erwärmen von einen Tragring (18) aufweisenden Vorformlingen (14) verschieden ausgebildete Lampen-Vorrichtungen aufweist.

8. Vorrichtung nach einem der Ansprüche 6 und 7, **dadurch gekennzeichnet, dass** die Vorrichtung (2) ein Kühlschild (12) zum Schützen des Gewindes eines Vorformlings (14) bei dessen Erwärmung aufweist.

9. Vorrichtung nach einem der Ansprüche 6 bis 8, **dadurch gekennzeichnet, dass** die Vorrichtung (2) mehrere in Reihe angeordnete Lampen-Vorrichtungen aufweist, wobei eine endseitige Lampen-Vorrichtung (3) gemäß einem der Ansprüche 1 bis 5 ausgebildet ist.

10. Vorrichtung zur Herstellung von Behältnissen, **dadurch gekennzeichnet, dass** diese Vorrichtung (1) wenigstens eine Lampen-Vorrichtung (3) gemäß einem der Ansprüche 1 bis 6 und / oder wenigstens eine Vorrichtung (2) gemäß einem der Ansprüche 7 bis 9 aufweist.

## Claims

1. Lamp device for the radiation heating of preforms (14) comprising a carrying ring (18) for the production of containers, in particular bottles, wherein this lamp device (3) forms a radiation source (22), and wherein this lamp device (3) forms a reflector (28) for reflecting radiation emitted by the radiation source, **characterised in that** the reflector (28) extends circumferentially over an angle of more than 250° with respect to the circumferential direction of an axis (26) running through the radiation source (22).

2. Lamp device according to claim 1, **characterised in that** the reflector (28) extends circumferentially over an angle, that is essentially 270°, with respect to the circumferential direction of an axis (26) running through the radiation source (22).

3. Lamp device according to one of the preceding claims, **characterised in that** the radiation source (22) is an infrared radiation source (22).

4. Lamp device according to one of the preceding claims, **characterised in that** the reflector (28) is of curved shape.

5. Lamp device according to claim 4, **characterised in that** the reflector (28) is curved in the shape of an are of a circle in cross section.

6. Apparatus for heating preforms (14) comprising a carrying ring for the production of containers, wherein the apparatus (2) comprises a plurality of lamp devices, **characterised in that** this apparatus (2) for heating preforms (14) comprises at least one lamp device (3) configured according to one of the preceding claims.

7. Apparatus, according to claim 6, **characterised in that** this apparatus (2) for heating preforms (14) comprising a carrying ring (18) comprises differently designed lamp devices.

8. Apparatus according to one of claims 6 and 7, **characterised in that** the apparatus (2) comprises a cooling shield (12) to protect the thread of a preform (14) during the heating of the latter.

9. Apparatus according to one of claims 6 to 8, **characterised in that** the apparatus (2) comprises a plurality of lamp devices arranged in a row, wherein a lamp device (3) arranged at the end is designed according to one of claims 1 to 5.

10. Apparatus for producing containers, **characterised in that** this apparatus (1) comprises at least one lamp device (3) according to one of claims 1 to 6 and/or at least one apparatus (2) according to one of claims 7 to 9.

## Revendications

1. Dispositif de lampes pour le chauffage par rayonnement de préformes (14) comportant une bague de support (18) pour la fabrication de récipients, en particulier de bouteilles, ledit dispositif de lampes (3) constituant une source de rayonnement (22) et ledit dispositif de lampes (3) constituant un réflecteur (28) pour la réflexion du rayonnement émis par la source de rayonnement,
**caractérisé en ce que** la circonférence du réflecteur (28) se déploie sur un angle supérieur à 250° par rapport à la direction périphérique d'un axe (26) s'étendant au travers de la source de rayonnement (22).

2. Dispositif de lampes selon la revendication 1, **caractérisé en ce que** la circonférence du réflecteur (28) se déploie sur un angle sensiblement égal à 270°, par rapport à la direction périphérique d'un axe (26) s'étendant au travers de la source de rayonnement (22).

3. Dispositif de lampes selon l'une des revendications précédentes, **caractérisé en ce que** la source de rayonnement (22) est une source de rayonnement infrarouge (22).

4. Dispositif de lampes selon l'une des revendications précédentes, **caractérisé en ce que** le réflecteur (28) est incurvé.

5. Dispositif de lampes selon la revendication 4, **caractérisé en ce que** le réflecteur (28) présente une section transversale incurvée en arc de cercle.

6. Dispositif de chauffage de préformes (14) comportant une bague de support pour la fabrication de récipients, ledit dispositif (2) comportant une pluralité de dispositifs de lampes, **caractérisé en ce que** ledit dispositif (2) comporte au moins un dispositif de lampes (3) réalisé selon l'une des revendications précédentes pour le chauffage de préformes (14).

7. Dispositif selon la revendication 6, **caractérisé en ce que** ledit dispositif (2) comporte des dispositifs de lampes de conception différente pour le chauffage de préformes (14) comportant une bague de support (18).

8. Dispositif selon l'une des revendications 6 et 7, **caractérisé en ce que** ledit dispositif (2) comporte un bouclier thermique (12) pour protéger le filetage d'une préforme (14) lors de son chauffage.

9. Dispositif selon l'une des revendications 6 à 8, **caractérisé en ce que** ledit dispositif (2) comporte plusieurs dispositifs de lampes montés en ligne, un dispositif de lampes (3) terminal étant réalisé selon l'une des revendications 1 à 5.

10. Dispositif pour la fabrication de récipients, **caractérisé en ce que** ledit dispositif (1) comporte au moins un dispositif de lampes (3) selon l'une des revendications 1 à 6 et/ou au moins un dispositif (2) selon l'une des revendications 7 à 9.
